# EUROPÄISCHE PATENTSCHRIFT

(11) **EP 1 277 626 B1**
(45) Veröffentlichungstag und Bekanntmachung des Hinweises auf die Patenterteilung: **29.11.2006**
(21) Anmeldenummer: 01125596.5
(22) Anmeldetag: 26.10.2001
(51) Int. Cl.: B60R 21/20

(54) **Luftsackmodul**
Air bag module
Module de sac gonflable

(30) Priorität: 17.07.2001 DE 10133968
(43) Veröffentlichungstag der Anmeldung: 22.01.2003
(73) Patentinhaber: Preh GmbH, 97616 Bad Neustadt a.d. Saale (DE)
(72) Erfinder: Brosch, Günther, 97618 Wollbach (DE); Bardroff, Hans, 97618 Hohenroth (DE)
(74) Vertreter: Dietrich, Barbara

(56) Entgegenhaltungen:
- EP-A- 0 999 100
- WO-A-98/42546
- DE-A- 3 811 373
- DE-A- 4 420 829
- DE-A- 19 726 074
- DE-A- 19 927 024
- GB-A- 2 323 572
- "AIRBAG COVER AND BASEPLATE ATTACHMENT" RESEARCH DISCLOSURE, KENNETH MASON PUBLICATIONS, HAMPSHIRE, GB, Nr. 403, 1. November 1997 (1997-11-01), Seite 817 XP000726727 ISSN: 0374-4353

## Beschreibung

Die Erfindung betrifft ein Luftsackmodul nach dem Oberbegriff der Patentanspruchs 1, welches mit einer Abdeckung versehen ist.

Luft- oder auch Gassäcke sind häufig in einem Gehäuse oder einem Modul integriert, welche mittels Abdeckungen der unterschiedlichsten Ausführungen vom Fahrgastinnenraum getrennt sind.

Aus der DE 199 27 024 A1 ist ein Airbagmodul für Lenkräder bekannt. Dieses weist eine Abdeckung auf, welche in einen oberen Bereich, einen mittleren sowie einen unteren Bereich unterteilt ist. Die oberen und mittleren Bereiche bilden eine Einheit und weisen eine solche Stärke auf, daß sie durch den sich entfaltenden Gassack nicht aufgerissen werden sondern sich nur dehnen können. Aufreißlinien verlaufen nur im unteren Bereich bis an die Ränder der Abdeckung, die bei Entfaltung des Airbags aufreißen. Befestigt ist die Abdeckung über Verschraubungen.

Die DE 38 11 373 C2 offenbart eine Abdeckung eines Gehäuses zur Aufnahme eines aufblasbaren Gassacks. Die Abdeckung, die um den Gassack gelagert ist, hat die Form eines rechteckigen Parallelepipeds und umfaßt eine im wesentlichen rechteckige obere Wand oder Deckwand und vier von den Rändern dieser Wand abwärts sich erstreckende Seitenwände. Eine Deckschicht der Deckwand ist aus einem weichen Kunstharz, wie Polyurethan, ausgebildet. Damit die Deckwand ohne Schwierigkeiten beim Aufblasen des Gassacks aufbrechen kann, weist die Deckwand einen im wesentlichen H-förmigen dünnen Bereich auf. Die Abdeckung ist über eine Befestigungsplatte mit dem Gehäuse befestigt. Bekannt ist auch, daß, mit Ausnahme des dünnen Bereiches, flexible Netze oder Maschen aufweisende Gewebe in die Abdeckung eingebettet sind.

Eine Polsterabdeckung sowie ein Verfahren zur Herstellung der Abdeckung für ein Airbaggehäuse offenbart die DE 44 20 829 A1. Die Polsterabdeckung besteht aus einem thermoplastischen Elastomer und einem leichten Füllstoff.

Die WO 98/42546, welches die Merkmale des Oberbegriffs des Anspruch 1 zeigt, beschreibt ein Airbagmodul mit einem Gehäuse, das mittels eines aus einem flexiblen Material hergestellten Deckel verschlossen ist. Das Gehäuse wird hierbei mittels des Deckels umfänglich abgedichtet und kann zusätzlich mit verformbaren Ösen verschlossen werden.

Eine Gassackeinrichtungseinheit gegen Seitenkollision beschreibt die DE 197 26 074 A1. Ein Abdeckbauteil ist als ein flexibles Sackabdeckbauteil ausgeführt, welches den Gassack vollständig umschließt. Das Material ist ein Kunstharzfilm oder ein Gewebematerial. Das Gewebematerial besteht dabei aus zwei gebondeten oder überlagerten Laminaten, wie Nylon und Polyurethan-Vorgespinst. Auf die Unterbringung des Gassacks in einem Gehäuse wird verzichtet.

Die Aufgabe der Erfindung besteht nun darin, ein Luftsackmodul aufzuzeigen, welches eine einfache Abdeckung aufweist und zudem einfach am Gehäuse anzubringen ist.

Gelöst wird die Aufgabe durch die Merkmale des Patentanspruchs 1.

Der Erfindung liegt die Idee zugrunde, einen offenen Bereich eines Gehäuses eines Luftsackmoduls mittels einem Gewebe, Gewirke bzw. Vliesstoff zu verschließen, wozu das Gehäuse, bzw. das Modul, Mittel aufweist, auf bzw. über die die Abdeckung gezogen und an diesen ohne zusätzliche weitere Mittel befestigt wird. Dadurch wird der offene Bereich verschlossen und der Luftsack im Gehäuse bzw. Modul gehalten.

Das Abdecken des Gehäuses erfolgt vorzugsweise automatisiert in einem dafür vorgesehenen Werkzeugträgersystem.

Die Abdeckung weist vorzugsweise bereits die geometrische Form zumindest des offenen Bereiches des Gehäuses bzw. des Moduls vor der Zuführung zum automatischen Verschließen auf.

Es besteht aber auch die Möglichkeit, bei der automatischen Zuführung die Abdeckung aus einem Endlosstreifen herzustellen. Dadurch kann die Form der Abdeckung dem Gehäuse bzw. Modul optimal und beliebig angepaßt werden.

In einer ersten Ausführung weist dazu das Gehäuse bzw. das Modul des Luftsacks an seinen Rändern am offenen Bereich mehrere zahnartige Spitzen auf, die dann, wenn die Abdeckung auf den offenen Bereich des Gehäuses gedrückt wird, sich in die Abdeckung einschneiden, ohne jedoch die Abdeckung zum weiteren Reißen zu bringen. Die Zahnspitzen werden danach über die Abdeckung seitlich umgebogen, was mit Hilfe eines entsprechenden Werkzeuges erfolgt, so daß die Abdeckung gegen die Gehäusewand eingeklemmt und gehalten wird.

In einer weiteren Variante werden weist des Gehäuse am Rand neben Zahnspitzen Laschen auf. Die Zahnspitzen weisen hierbei nach außen. Nachdem die Abdeckung auf diesen Zahnspitzen aufgezogen worden ist, werden die Laschen nach innen über die Abdeckung in die Gehäusewand zurück gedrückt.

Des weiteren ist es auch möglich, an die Abdeckung mit angespritzten Rahmenelementen zu versehen, die über die nach außen gestellten Haltetaschen an den Gehäusewänden gezogen werden und in den Haltetaschen arretieren.

In Weiterführung der Erfindung ist es natürlich möglich, ein Spezialband um die umgebogenen Zahnspitzen bzw. Laschen zu legen, so daß diese durch das Spezialband verdeckt werden.

Die Sollbruchstellen, an denen die Abdeckung reißen soll, können herkömmlich eingenäht bzw. eingebracht werden. Diese Sollbruchstellen können entlang des Gehäuserandes oder mittig in der Abdeckung vorgesehen sein.

Anhand von mehreren Ausführungsbeispielen mit Zeichnung soll die Erfindung näher erläutert werden.
Es zeigt
- Fig. 1: in einer Seitendarstellung eine erste Variante einer Abdeckung für ein Luftsackmodul,
- Fig. 1a: in vergrößerter Darstellung den Ausschnitt A aus Fig. 1,
- Fig. 1b: verschiedene Ausführungsformen einer Zahnspitze aus Fig. 1a,
- Fig. 2: in einer Seitendarstellung eine weitere Variante der Abdeckungsbefestigung,
- Fig. 2a: in vergrößerter Darstellung den Ausschnitt B aus Fig.2,
- Fig. 2b: eine Darstellung des geschlossenen Zustandes aus Fig. 2a,
- Fig.3: in einer Seitendarstellung eine dritte Variante der Abdeckungsbefestigung
- Fig.3a: in vergrößerter Darstellung den Ausschnitt C aus Fig. 3.

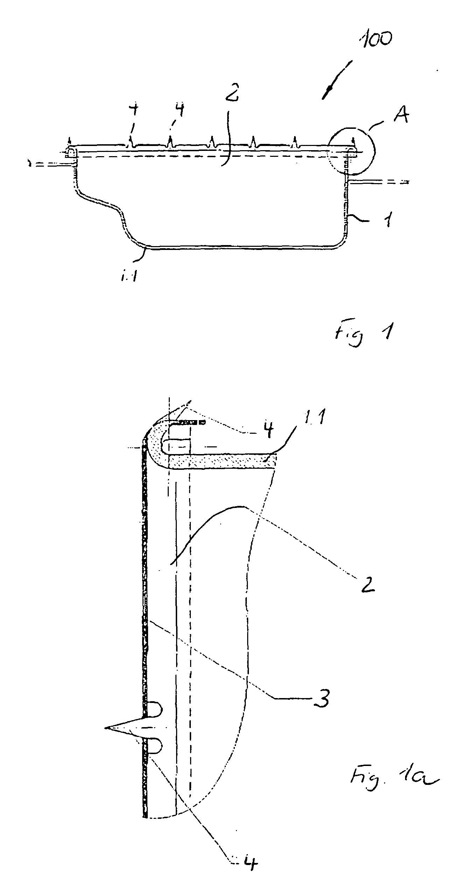

In Fig. 1 ist in einer Seitendarstellung ein Gehäuse 1 eines Luftsackmoduls 100 dargestellt. Im Gehäuse 1, welches eine Gehäusewand 1.1, und einen offenen Bereich 2 darin ausweist, sind ein nicht näher dargestellter, aufblasbarer Gas- bzw. Luftsack, ein Generator sowie diverse Befestigungsmittel gelagert, die Bestandteile des Luftsackmoduls 100 sind. Den offenen Bereich 2 überdeckt eine Abdeckung 3 (fig. 1a), die auf mehreren Zahnspitzen 4 des Gehäuses 1 gespannt und fixiert ist. Die Zahnspitzen 4 ragen um den offenen Bereich 2 von bzw. aus der Gehäusewand 1.1 hervor. Die Abdeckung 3 ist hierbei ein flexibles Gewebe, Gewirke bzw. ein Vliesstoff.

Wie in Fig. 1a vergrößert dargestellt, schneiden sich die nach oben bzw. unter herausragenden Zahnspitzen 4 in entsprechende Bereiche der Abdeckung 3 ein, wenn diese von einem nicht näher dargestellten Oberwerkzeug eines Werkstückträgersystems gespannt und vertikal von oben auf das Gehäuse 1 und damit auf die Zahnspitzen 4 aufgedrückt wird. Im weiteren Verlauf der Befestigung der Abdeckung 3 auf bzw. am Gehäuse 1 werden die Zahnspitzen 4 seitlich umgebogen, wodurch die Abdeckung 3 in diesem Abschnitt gegen die Gehäusewand 1.1 eingeklemmt und gehalten wird.

Verschiedene Formen der Zahnspitzen 4 sind in der Fig. 1 b dargestellt.

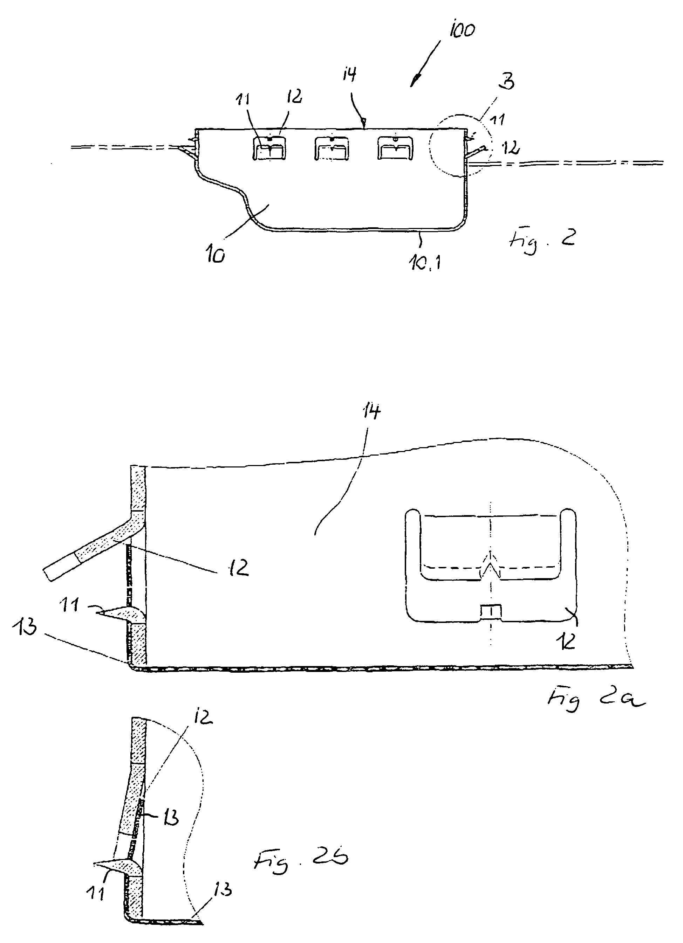

Fig. 2 zeigt ein weiteres Gehäuse 10 des Luftsackmoduls 100, welches im Gegensatz zum Gehäuse 1, seitliche Zahnspitzen 11 ausweist, die funktional mit Laschen 12 zusammenwirken, die gleichfalls Teil der Gehäusewand 10.1 sind. Das Gehäuse 10 weist einen offenen Bereich 14 auf, der durch eine Abdeckung 13 verschlossen wird. In ähnlicher Art wie die Abdeckung 3 ist die Abdeckung 13 ein Gewebe, ein Gewirke bzw. ein Vliesstoff und wird vertikal von oben auf das Gehäuse 10 gedrückt. Dabei wird die Abdeckung 13 auf bzw. über die seitlichen Zahnspitzen 11 und unter die Laschen 12 gezogen (Fig. 2a). Die Zahnspitzen 11 schneiden sich dabei in kleine Bereiche der Abdeckung 13 ein. Im Anschluß werden die nach außen gebogenen Laschen 12 nach innen in die Gehäusewand 10.1 zurück gedrückt und die damit fixierte Abdeckung 13 gehalten, wie in Fig. 2b dargestellt.

Die Zahnspitzen 11 können ebenfalls die in Fig. 1b dargestellten Zahnspitzenformen aufweisen.

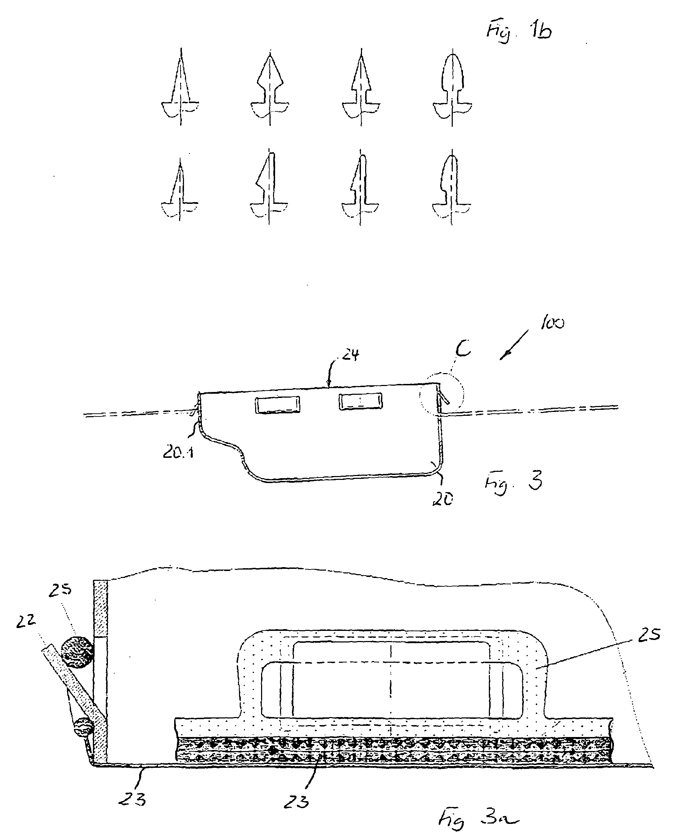

Fig. 3, 3a zeign eine weitere Ausführung einer Abdeckung 23 über einen offenen Bereich 24 eines Gehäuses 20 des Luftsackmoduls 100 in einer Seitendarstellung. Eine Gehäusewand 20.1 weist hierbei nach außen gestellte Haltetaschen oder taschenähnliche Laschen 22 auf, die in Fig. 3a deutlicher erkennbar sind. An die Abdeckung 23 wird ein Kunststoff umspritzt, welcher dann ein angespritztes Rahmenelement 25 an der Abdeckung 23 bildet. Diese werden von einem Oberwerkzeug des Werkstückträgersystems gegriffen und über das Gehäuse 20 gezogen. Dabei werden die Rahmenelemente 25 über die nach außen gestellten Haltetaschen 22 gezogen und in diesen arretiert.

Der Vorteil der beschriebenen Abdeckungen 3, 13, 23 besteht unter anderem darin, daß die Befestigungsschritte automatisiert innerhalb des Werkstückträgersysytems ablaufen können. Die Zuführung als auch die Befestigung der Andeckung 3, 13, 23 kann somit vollautomatisch ablaufen. Auch das Anspritzen des Kunststoffs kann ins System integriert werden.

## Patentansprüche

1. Luftsackmodul (100) mit in einem Gehäuse (1, 10, 20) angeordneten Luftsack und mit einer aus einem flexiblen Material bestehenden Abdeckung (3, 13, 23) für den Luftsack, welches zudem einen Generator sowie Befestigungsmittel beinhaltet, aufweisend einen offenen Bereich (2, 14, 24), der mittels der Abdeckung (3, 13, 23) abdeckbar ist, wobei
- das Gehäuse (1, 10, 20) einteilig ausgeführt ist,
- aus dem Gehäuse (1, 10, 20) Mittel (4, 11, 12, 22) herausgeformt sind, die aus dem Gehäuse (1, 10, 20) herausragen und
- die Abdeckung (3, 13, 23) in der Weise über die Mittel (4, 11, 12, 22) gezogen sind, dass die Mittel (4, 11, 12, 22) aus der Abdeckung (3, 13, 23) herausragen,
**dadurch gekennzeichnet, dass**
- die Mittel (4) in Form von umbiegbaren Zahnspitzen (4) ausgebildet sind, wobei die Zahnspitzen (4) sich in die Abdeckung (3) einschneiden, wenn die Abdeckung (3) auf den offenen Bereich des Gehäuses (1) gedrückt wird, wonach die Zahnspitzen (4) über die Abdeckung (3) seitlich umgebogen werden; oder
- die Mittel (11, 12) aus seitlich aus dem Gehäuse (1, 10, 20) herausragenden Zahnspitzen (11) und biegbaren, die Abdeckung (3, 13, 23) überdeckenden Laschen (12) gebildet sind, wobei nach dem Aufziehen der Abdeckung (13) auf den Zahnspitzen (11), die Laschen (12) nach innen über die Abdeckung (13) in Richtung des Gehäuses (10) gedrückt werden; oder
- die Mittel (22) aus seitlich, aus dem Gehäuse (20) nach außen gestellten Haltelaschen (22) gebildet sind, wobei die Abdeckung (23) mit angespritzten Rahmenelementen (25) versehen ist, die über die Haltelaschen (22) gezogen werden und in den Haltelaschen (22) arretieren.

2. Luftsackmodul nach Anspruch 1, **dadurch gekennzeichnet, dass** die Abdeckung (3, 13, 23) ein Gewebe, ein Gewirke bzw. ein Vliesstoff ist.

3. Luftsackmodul nach Anspruch 2, **dadurch gekennzeichnet, dass** in der Abdeckung (3, 13, 23) des Gehäuserandes oder mittig in der Abdeckung (3, 13, 23) Sollbruchstellen vorgesehen sind.

4. Luftsackmodul nach einem der Ansprüche 1 bis 3, **dadurch gekennzeichnet, dass** die Abdeckung (3, 13, 23) der geometrischen Form des Gehäuses (1, 10, 20) angepasst ausgebildet ist.

5. Luftsackmodul nach einem der Ansprüche 1 bis 4, **dadurch gekennzeichnet, dass** die Abdeckung (3, 13, 23) aus einem Endlosstreifen hergestellt ist.

6. Luftsackmodul nach einem der Ansprüche 1 bis 5, **dadurch gekennzeichnet, dass** das Luftsackmodul (100) mittels eines Werkstückträgersystems automatisch verschließbar ist.

## Claims

1. Airbag module (100) having an airbag which is arranged in a housing (1, 10, 20) and having a covering (3, 13, 23) for the airbag, which covering (3, 13, 23) is composed of a flexible material, which airbag module (100) additionally contains a generator and fastening means, having an open region (2, 14, 24) which can be covered by means of the covering (3, 13, 23),
- the housing (1, 10, 20) being of one-piece configuration,
- means (4, 11, 12, 22) which protrude out of the housing (1, 10, 20) being shaped out of the housing (1, 10, 20), and
- the covering (3, 13, 23) being pulled over the means (4, 11, 12, 22) in such a way that the means (4, 11, 12, 22) protrude out of the covering (3, 13, 23),
**characterized in that**
- the means (4) are configured in the form of tooth tips (4) which can be bent over, the tooth tips (4) cutting into the covering (3) when the covering (3) is pressed onto the open region of the housing (1), after which the tooth tips (4) are bent away laterally over the covering (3); or
- the means (11, 12) are formed from tooth tips (11) which protrude laterally out of the housing (1, 10, 20) and bendable tabs (12) which cover the covering (3, 13, 23), the tabs (12) being pressed inwards over the covering (13) in the direction of the housing (10) after the covering (13) has been pulled onto the tooth tips (11); or
- the means (22) are formed from holding lugs (22) which are positioned laterally outwards out of the housing (20), the covering (23) being provided with frame elements (25) which are injection-moulded onto it, are pulled over the holding lugs (22) and lock in the holding lugs (22).

2. Airbag module according to Claim 1, **characterized in that** the covering (3, 13, 23) is a woven fabric, a knitted fabric or a nonwoven.

3. Airbag module according to Claim 2, **characterized in that** predetermined breaking points are provided in the covering (3, 13, 23) of the housing edge or centrally in the covering (3, 13, 23).

4. Airbag module according to one of Claims 1 to 3, **characterized in that** the covering (3, 13, 23) is configured so as to be adapted to the geometric shape of the housing (1, 10, 20).

5. Airbag module according to one of Claims 1 to 4, **characterized in that** the covering (3, 13, 23) is manufactured from an endless strip.

6. Airbag module according to one of Claims 1 to 5, **characterized in that** the airbag module (100) can be closed automatically by means of a workpiece carrier system.

## Revendications

1. Module d'airbag (100) comprenant un airbag disposé dans un boîtier (1, 10, 20) et un recouvrement (3, 13, 23) pour l'airbag, constitué d'un matériau flexible, qui contient en outre un générateur ainsi que des moyens de fixation, présentant une région ouverte (2, 14, 24), qui peut être recouverte par le recouvrement (3, 13, 23),
- le boîtier (1, 10, 20) étant réalisé en une seule partie,
- des moyens (4, 11, 12, 22) étant formés à partir du boîtier (1, 10, 20), lesquels font saillie hors du boîtier (1, 10, 20) et
- le revêtement (3, 13, 23) étant tiré par-dessus les moyens (4, 11, 12, 22) de telle sorte que les moyens (4, 11, 12, 22) fassent saillie hors du revêtement (3, 13, 23),
**caractérisé en ce que**
- les moyens (4) sont réalisés en forme de pointes de dents flexibles (4), les pointes de dents (4) s'enfonçant dans le recouvrement (3) lorsque le recouvrement (3) est pressé sur la région ouverte du boîtier (1), de sorte que les pointes de dents (4) soient fléchies latéralement par-dessus le recouvrement (3) ; ou
- les moyens (11, 12) sont formés de pointes de dents (11) saillant latéralement hors du boîtier (1, 10, 20) et de pattes flexibles (12), recouvrant le recouvrement (3, 13, 23), après que le recouvrement (13) ait été tiré sur les pointes de dents (11), les pattes (12) étant pressées vers l'intérieur par-dessus le recouvrement (13) dans la direction du boîtier (10) ; ou
- les moyens (22) sont formés de pattes de retenue latérales (22) orientées vers l'extérieur depuis le boîtier (20), le recouvrement (23) étant pourvu d'éléments de cadre moulés par injection (25), qui sont tirés par-dessus les pattes de retenue (22) et qui se bloquent dans les pattes de retenue (22).

2. Module d'airbag selon la revendication 1, **caractérisé en ce que** le recouvrement (3, 13, 23) est un tissu, un tissu à mailles ou un non-tissé.

3. Module d'airbag selon la revendication 2, **caractérisé en ce que** des points destinés à la rupture sont prévus dans le recouvrement (3, 13, 23) du bord du boîtier ou au centre du recouvrement (3, 13, 23).

4. Module d'airbag selon l'une quelconque des revendications 1 à 3, **caractérisé en ce que** le recouvrement (3, 13, 23) est réalisé de manière adaptée à la forme géométrique du boîtier (1, 10, 20).

5. Module d'airbag selon l'une quelconque des revendications 1 à 4, **caractérisé en ce que** le recouvrement (3, 13, 23) est fabriqué à partir d'une bande sans fin.

6. Module d'airbag selon l'une quelconque des revendications 1 à 5, **caractérisé en ce que** le module d'airbag (100) peut être fermé automatiquement au moyen d'un système de support de pièce.
